# EUROPÄISCHE PATENTSCHRIFT

(11) **EP 2 158 138 B1**
(45) Veröffentlichungstag und Bekanntmachung des Hinweises auf die Patenterteilung: **14.11.2012**
(21) Anmeldenummer: 08773400.0
(22) Anmeldetag: 12.06.2008
(51) Int. Cl.: B65D 51/20

(54) **GETRÄNKEZUBEREITUNGSGERÄT MIT EINER BRÜHEINHEIT UND EINEM MEHRPORTIONBEHÄLTER FÜR PULVERFÖRMIGE GETRÄNKEBASISSTOFFE**
BEVERAGE PREPARATION APPARATUS WITH BREWING UNIT AND MULTI-PORTION CONTAINER FOR POWDERED DRINK CONSTITUENTS
APPAREIL DE PREPARATION DE BOISSONS AVEC UNITE DE BREUVAGE ET RESERVOIR MULTIPORTION POUR SUBSTANCES PULVERULENTES DE BASE POUR BOISSONS

(30) Priorität: 21.06.2007 DE 202007008815 U
(43) Veröffentlichungstag der Anmeldung: 03.03.2010
(73) Patentinhaber: Eugster/Frismag AG, 8580 Amriswil (CH)
(72) Erfinder: MAHLICH, Gothard, 61476 Kronberg (DE)
(74) Vertreter: Schubert, Siegmar
(86) Internationale Anmeldenummer: PCT/EP2008/004713
(87) Internationale Veröffentlichungsnummer: WO 2008/155063

(56) Entgegenhaltungen:
- EP-A- 1 028 068
- WO-A-02/081308
- WO-A-2004/041043
- AU-B2- 541 692
- FR-A- 2 489 266

## Beschreibung

Die Erfindung betrifft einen austauschbaren luft- und aromadicht verschlossenen Mehrportionbehälter für pulverförmige Getränkebasisstoffe der Getränkebasisstoffe, insbesondere Milchpulver, für die Zubereitung mehrerer Portionen Getränke oder Milchschaum enthält und mit Andockelementen für das Andocken an eine Andockvorrichtung eines Getränkezubereitungsgerätes ausgestattet ist.

Zum Stand der Technik gehören Getränkezubereitungsgeräte mit einer Brüheinheit die für den Einsatz von gemahlenem losen Kaffeepulver oder vorportionierten Kaffee- oder Kakaoportionseinheiten oder Milchkonzentrat- oder Milchpulvereinheiten vorgesehen sind. Diese Portionseinheiten können in Form von Aluminium- oder Kunststoffkapseln oder in Form von Pouches vorliegen, sind Einportionskapseln und ihr Inhalt ist jeweils für die Zubereitung einer üblichen Menge eines Getränkes wie z.B. einer Tasse Kaffee oder eines Kaffee-Milchgetränkes ausgelegt.

Diese Brüheinheiten für die Verwendung von losem Kaffeepulver oder für den Einsatz von vorportionierten Portionseinheiten mit pulverförmigen Getränke-Basisstoffen für die Getränkezubereitung sind Stand der Technik und brauchen nicht näher beschrieben zu werden. Ebenso ist die Verwendung von Milchpulver oder Milchkonzentrat an Stelle von Frischmilch für die Zubereitung von Milchschaum für Cappuccino, d.h. einer Kombination von Kaffee und darauf aufliegendem Milchschaum, bekannt. In Haushaltzubereitungsgeräten werden dazu bevorzugt Milchpulver- oder Milchkonzentratkapseln verwendet.

In kommerziellen Kaffeezubereitungsgeräten, insbesondere in sog. Vendingautomaten, wird dagegen zu diesem Zweck das Milchpulver in fest in das Zubereitungsgerät integrierten nachfüllbaren Behältern bevorratet, aus denen es portionsweise, d.h. jeweils für eine Tasse des zuzubereitenden Getränkes, durch Förderschnecken in eine Misch- und Schäumvorrichtung transportiert, dort mit Wasser aufgemischt und mittels eines rotierenden Schäumquirls aufgeschäumt wird.

In der Patentanmeldung AZ DE 20 2006 008 409.6 ist eine Milchpulver-Schäumvorrichtung beschrieben, die aus einem in dem Zubereitungsgerät integrierten Milchpulverbehälter programmgesteuert jeweils eine Milchpulverportion abruft und in einer speziellen Schäumvorrichtung unter Beigabe von Zubereitungswasser und Luft Milchschaum produziert. Diese Lösung unterscheidet sich von den in den Vendingautomaten gebräuchlichen Quirl-Schäumern dadurch, dass das eigentliche Aufschäumen in einer Schäumkammer durch Rotationsverwirbelung von Milch und Luft und nicht mit einem mechanischen Quirl erfolgt.

Ein gattungsgemäßes Getränkezubereitungsgerät mit einer Brüheinheit und Mehrportionsbehälter ist aus der WO 2004/041043 A2 bekannt.

Die Art der portionsweisen Milchpulverzugabe aus einem nachfüllbaren Vorratsbehälter hat den Vorteil, dass nicht für jede Cappuccinozubereitung eine neue Portionseinheit in das Zubereitungsgerät gelegt werden muss, aber den Nachteil, dass , da nicht jedes handelsüblich käufliche Milchpulver zur Milchschaumerzeugung geeignet ist, ungeeignetes Milchpulver in den Vorratsbehälter gefüllt wird und kein Milchschaum zufriedenstellender Konsistenz entsteht. Im Unterschied zu der portionsweisen Zugabe von Milchpulver aus einem Vorratsbehälter werden insbesondere bei Haushalt-Kaffeezubereitungsgeräten, wie schon erwähnt, Milchpulver-Portionskapseln verwendet in denen jeweils nur eine Milchpulverportion für eine Tasse Cappuccino beinhaltet ist. Die Portionseinheiten können dabei sowohl in Form von Aluminium- oder Kunststoffkapseln vorliegen und beinhalten Milchkonzentrat oder aufschäumfähiges Milchpulver. Bei diesen Portionskapseln erfolgt die Zuführung des Zubereitungswassers mittels einer wasserführenden Einstichnadel, die in die Kapseln eingestochen wird. Das Wasser wird dabei mittels einer Pumpe aus einem Wasserbehälter und durch einen Durchlauferhitzer gepumpt und über eine Heißwasserzuführleitung der Einstichnadel zugeführt. Anschließend wird das Milchpulver in der Kapsel aufgelöst und mittels einer in der Kapsel angeordneten Schäumvorrichtung aufgeschäumt, oder bei Kapseln ohne integrierte Schäumvorrichtung wird die durch das Auflösen entstandene Milch in einer separaten Aufschäumvorrichtung unter Zuführung von Luft aufgeschäumt. Diese Art der Milchschaum-Zubereitung mittels Milchpulver-Einportionskapseln wird in Kaffeezubereitungsgeräten verwendet, die auch für die Kaffeezubereitung vorportionierte Kaffeekapseln verwenden.

Nachteil der Verwendung von Einportion-Milchpulverkapseln ist, dass für jede Cappuccinozubereitung eine neue Kapsel eingelegt und entsorgt werden muss und dass in diesen Getränkezubereitungsgeräten die mit Kapseln mit verschiedenen Inhalten, d.h. Kapseln für Kaffee, Kakao, Milchkonzentrat oder Milchpulver arbeiten, nur eine Aufnahmekammer für die verschiedenen Kapseln vorgesehen ist. Damit ist es bei diesen Getränkezubereitungsgeräten zur Zubereitung eines Kaffee-Milchgetränkes, bedingt durch die Nutzung der gleichen Aufnahmekammer für Kaffee-, Kakao- und Milchkonzentrat- oder Milchpulverkapseln zwangsläufig erforderlich, dass die jeweils zweite Zubereitungsart in einem zweiten Arbeitsgang erfolgen muss. Das heißt, dass z.B. für eine Cappuccinozubereitung nach dem Milchschaumzubereitungszyklus erst die verbrauchte Milchkonzentrat- oder Milchpulverkapsel aus der Brüheinheit entsorgt werden muss, daran anschließend die Kaffeekapsel in die Brüheinheit eingelegt und schließlich nach dem Kaffeezubereitungszyklus entsorgt werden muss. Außerdem haben damit alle Kapseln die selben Wasserzuführungs- und Getränkeaustrittsvorrichtungen.

Systembedingt ist diese Art der Zubereitung eines Kaffeemilchgetränkes unökonomisch, da für jede Portion eines Kaffeemilchgetränkes zwei Einportions-Kapseln benötigt werden und wegen der nacheinander zu erfolgenden Be- und Entladungsvorgänge umständlich ist und mit Zeitverzögerungen einhergeht.

Nachteil der ortsfesten nachfüllbaren Milchpulvervorratsbehälter ist, dass auch nicht-schäumfähiges Milchpulver eingefüllt werden kann und kein Milchschaum zufriedenstellen der Konsistenz entsteht.

Die vorliegende Erfindung geht von der Aufgabe aus, einen Milchpulverbehälter vorzuschlagen, mit dem die Getränkezubereitung, insbesondere eine Kaffee- oder Kakaozubereitung, sowie die Milch- oder Milchschaumerzeugung in einem rationelleren Zubereitungsablauf erfolgen kann, bei dem Verzögerungen durch Beschickungs- und Entsorgungsvorgänge verkürzt sind oder vermieden werden.

Zu diesem Zweck wird ein Getränkezubereitungsgerät mit einer Brüheinheit und einem Mehrportionsbehälter mit den Merkmalen des Anspruchs 1 oder 3 vorgeschlagen.

Der erfindungsgemäße Mehrportionbehälter für Milchpulver, im nachfolgenden als Mehrportionsbehälter bezeichnet, ist für die Verwendung in einem Getränkezubereitungsgerät dessen Brüheinheit mit einer ersten Aufnahmekammer in Form einer Brühkammer für die Aufnahme von losem Kaffeepulver oder einer Kaffee- oder Kakaoportionseinheit und mit einer zweiten Aufnahmevorrichtung mit einer Andockvorrichtung ausgestattet ist, die zur Aufnahme eines luft- und aromadicht versiegelten austauschbaren Mehrportionbehälters vorgesehen ist und der eine Misch- und Schäumvorrichtung zugeordnet ist, die zur Zubereitung von Milch oder Milchschaum geeignet ist und die einen Auslauf für die bereitete Milch oder den Milchschaum aufweist.

Mit dieser Brüheinheit können die Kaffee- oder Kakaozubereitung einerseits und die Milch- oder Milchschaumerzeugung andererseits je nach Vorgabe bzw. Steuerung der Brüheinheit gleichzeitig oder zeitlich versetzt ablaufen, wobei das Bestücken der Brüheinheit mit einer Einportion - Milchpulverkapsel für jede Milchgetränkzubereitung entfällt.

Erfindungsgemäß ist dafür die Brüheinheit, wie bereits erwähnt, außer mit einer Brühkammer für die Aufnahme von losem Kaffeepulver oder der Aufnahme einer Kaffeeportionskapsel oder eines Kaffeepouches mit einer Aufnahmevorrichtung in Form einer Andock- vorrichtung für die Aufnahme eines gekapselten Mehrportionbehälters ausgestattet. Wobei dieser Mehrportionbehälter den Vorteil der ortsfesten großen Vorratsbehälter, dass nicht für jede Cappuccinozubereitung eine neue Kapsel eingelegt werden muss, mit dem Vorteil der Einportionskapsel, dass garantiert nur schäumfähiges Milchpulver zur Anwendung kommt vereint und Milchpulver für mehrere Zubereitungen eines Kaffee-Milchgetränkes enthält und als Austauschteil in das Zubereitungsgerät eingebracht werden kann. Nur durch den gekapselten und versiegelten Mehrportionbehälter ist damit gewährleistet, dass nur optimal schäumfähige Milchpulversorten Verwendung finden.

Diese Art der Milchpulverbevorratung mit einem Mehrportionbehälter kann dabei in allen Kaffeezubereitungsgeräten, unabhängig davon ob es sich um Vollautomaten handelt die mit Kaffeemahlwerken ausgestattet sind oder Geräten die mit Brühkolben für loses Kaffeepulver oder mit Kaffee-Portionskapseln oder Kaffeepouches arbeiten, sofern diese mit einer entsprechenden Andockvorrichtung für einen erfindungsgemäßen Mehrportionbehälter und einer Misch- und Schäumvorrichtung ausgestattet sind, Verwendung finden. Die Aufbereitung und das Schäumen von Milchpulver kann dabei sowohl mit mechanischen Quirlen als auch mit der Rotationsverwirbelungsmethode erfolgen. Eine derartige Brüheinheit kann vielseitig benutzt werden, z.B. um nur Kaffee zuzubereiten muss nur die Kaffeebrühkammer mit dem losen Kaffeepulver gefüllt oder mit einer Kaffeeportionseinheit bestückt werden, oder nur zur Milch bzw. Milchschaumzubereitung braucht für mehrere Zubereitungen nur ein Mehrportionbehälter angedockt zu werden, oder zur Zubereitung eines Cappuccino oder Latte Macchiato müssen sowohl die Kaffeebrühkammer mit Kaffee oder einer Kaffeeportionseinheit gefüllt bzw. bestückt werden und für mehrere Zubereitungen braucht nur ein Mehrportionbehälter angedockt zu werden. Zweckmäßigerweise sind die Brühkammer und die Andockvorrichtung mit Prüfvorrichtungen versehen, die jeweils das Vorhandensein einer Kaffeeportionseinheit oder eines Mehrportionbehälters prüfen und mittels einer Steuerungsanordnung die Zubereitungswasserzuführung mittels eines in den Zubereitungswasser-Zuführungen liegenden motorisch angetriebenen Keramikscheibenventils oder mittels Magnet- oder Schlauchventilen nur dann freischalten, wenn die entsprechenden Positionen besetzt sind. Damit wird eine sichere Funktion der Brüheinheit bei wechselnder oder gleichzeitiger Belegung der Brühkammer und /oder der Andockvorrichtung gewährleistet.

Ein wesentlicher Aspekt der Brüheinheit besteht darin, dass diese bevorzugt zur Zubereitung eines Kaffee-Milchgetränkes von Milch oder Milchschaum verwendet werden kann. Dazu ist es notwendig, dass das aus dem Mehrportionbehälter entnommene Milchpulver in einer Misch- und Schäumvorrichtung mit Wasser gemischt und je nach gewünschter Getränkeart aufgeschäumt werden kann. Zur diesem Vorgang ist der Andockvorrichtung für den Mehrportionbehälter eine Misch- und Schäumvorrichtung zugeordnet, die unterhalb der Andockvorrichtung angeordnet ist und mit deren Milchpulveraustritt in Verbindung steht. Gleichwohl ist es möglich, die Schäumvorrichtung für Reinigungszwecke auswechselbar zu gestalten oder als austauschbares Wegwerfteil zu verwirklichen, um ohne zeitaufwendige Spül- und Reinigungsvorgänge einen hygienischen Betrieb zu gewährleisten.

Konstruktiv können die Kaffeebrühkammer und die Andockeinheit mit der Misch- und Schäumvorrichtung kompakt als eine gemeinsame Baueinheit ausgebildet sein. Es ist aber auch möglich, die Kaffeebrüheinheit und die Andockeinheit mit der Misch- und Schäumvorrichtung als separate Einheiten zu konzipieren. Unabhängig davon, ob die beiden Vorrichtungen in einem gemeinsamen Bauteil integriert oder getrennt voneinander angeordnet sind, werden die Ausläufe der beiden Vorrichtungen zweckmäßigerweise so angeordnet, dass sie die in ihnen bereiteten Produkte sowohl in ein einziges Auffanggefäß als auch in zwei nebeneinander stehende Auffanggefäße leiten können. Statt dessen ist es aber in beiden Fällen der in einer Baueinheit integrierten oder nicht integrierten Anordnung der Brühkammer und der Misch- und Schäumvorrichtung möglich, deren Ausläufe zu einem gemeinsamen Auslaufkanal zusammenzuführen, um durch diesen ein einheitliches Getränkeprodukt oder zeitlich hintereinander zwei Getränkeprodukte in das Aufnahmegefäß zu leiten. Auch ist es unbenommen, die Brüheinheit zusätzlich mit einer Dampfauslassdüse für die Zubereitung von Milchschaum aus Frischmilch zu versehen. Weiterhin kann die Brüheinheit zur hygienischen Reinigung der Brühkammer und der Misch- und Schäumvorrichtung mit einer für beide Vorrichtungen gleichzeitig aktivierbaren Spülvorrichtung versehen sein, wobei eine Spülung vor oder nach einem Getränkezubereitungszyklus erfolgen kann.

Zur flexiblen Zubereitung verschiedener Getränke sowie zur Milchaufbereitung, insbesondere Herstellung von Milchschaum, fördert eine Pumpe Wasser aus einem Wasservorratsbehälter durch einen Durchlauferhitzer und unter Zwischenschaltung einer Ventilanordnung und einem Durchflussmesser in die Kaffeebrühkammer und/oder die Misch- und Schäumvorrichtung. Die Ventilanordnung kann von einer Steuerungsanordnung so aktiviert werden, dass Wasser im wesentlichen gleichzeitig der Brühkammer und der Misch- und Schäumvorrichtung zugeführt wird oder diesen beiden Zubereitungsvorrichtungen zeitlich gestaffelt zugeführt wird, oder aber lediglich der Brühkammer oder nur der Misch- und Schäumvorrichtung zugeleitet wird. Mit der Steuerungsanordnung werden also die Aktivierung von nur einer oder beiden Zubereitungsvorrichtungen, die Zubereitungsreihenfolge und die jeweils zu dosierenden Wassermengen gesteuert. Damit ergeben sich insbesondere für ein Kaffee-Milchgetränk folgende Möglichkeiten: Gleichzeitige Zubereitung von Kaffee und Milch oder Milchschaum, oder erst Brühen von Kaffee und dann Zubereitung von Milchschaum, oder aber erst Zubereitung von Milchschaum und dann Brühen von Kaffee oder erst Zubereiten von Milch, dann Milchschaum und schließlich Espresso. Dabei kann zusätzlich die verabreichte Wassermenge und die daraus resultierende Getränkemenge gewählt werden. Die Wasserzufuhr in die Brühkammer und/oder in die Misch- und Schäumvorrichtung erfolgt dabei, wie bereits geschildert, mittels einer Ventilanordnung, die bevorzugt von Ausgängen einer Steuerungsanordnung gesteuert wird und zwischen dem Durchlauferhitzer und der Brühkammer bzw. der Misch- und Schäumvorrichtung angeordnet ist. Die gesteuerte Ventilelanordnung kann bevorzugt als Keramikscheibenventil realisiert sein, das zur Zubereitung hochwertiger Getränke besonders geeignet ist. Die gesteuerten Ventile können aber auch als einzelne Magnetventile oder als Schlauchklemmventile verwirklicht sein. Eine Zubereitungswasser-Mengensteuerung kann mittels der genannten Ventile und kontrolliert mittels in den Versorgungsleitungen liegenden Durchflussmessern (flow meter) und der Steuervorrichtung oder von Hand, dem subjektiven Geschmack entsprechend, erfolgen.

Wie oben erwähnt können Prüfeinheiten an der ersten Aufnahmevorrichtung und an der zweiten Aufnahmevorrichtung in Verbindung mit einer Steuerungsanordnung eine Wasserzufuhr über die gesteuerten Ventile zu einer der Zubereitungsvorrichtungen bzw. zu beiden nur freischalten, wenn in die Aufnahmevorrichtung jeweils eine Portionseinheit oder ein Mehrportionbehälter eingesetzt ist.

Weiterhin ist es zur Erhöhung der Betriebssicherheit zweckmäßig, Mittel zum Wasserzufuhrstop bei geöffneter Kaffeebrühkammer vorzusehen, die eine Wasserzufuhr zu der Kaffeebrühkammer nur dann freischalten, wenn die Kaffeebrühkammer geschlossen ist, bzw. die Wasserzufuhr unterbrechen wenn während des Zubereitungsvorganges die Kaffeebrühkammer geöffnet wird.

Die Zubereitung eines gewünschten Getränkes kann gemäß automatisch erfolgen, indem die Reihenfolge der Zubereitung der Getränkekomponenten sowie deren Menge, insbesondere für Kaffee- und Milchschaumerzeugung, fest programmiert ist. Vorteilhaft können mehrere solcher Programme für verschiedene Getränke in einer Steuerungsanordnung gespeichert sein und mittels einer Auswahlvorrichtung ausgewählt werden.

Für den erfindungsgemäßen Mehrportionbehälter sind verschiedene Bauformen möglich. Bevorzugten Ausführungsformen ist dabei gemeinsam, dass die Mehrportionbehälter gemäß Ansprüche 1 und 3 in Form einer zylindrischen Hülse ausgeführt sind die an ihrem oberen Ende, gemäß Anspruch 2 fest mit einem Deckel verschlossen ist und sich an ihrem unteren Ende gemäß Ansprüche 1 und 3 trichterförmig nach unten in Richtung des Milchpulverauslaufes verjüngt und in einen Hals übergeht, der mit einem unteren Verschlusselement des Mehrportionsbehälters ausgestattet ist und auch die Andock- und Verriegelungselemente für das Zusammenwirken mit den Andockelementen des Getränkezubereitungsgerätes trägt.

Das Verschlusselement kann gemäß en Anspruch 1 ein Verschlusszylinder oder gemäß Anspruch 3 eine hutförmige Kappe sein oder, nicht wie beansprucht, eine Verschlussfolie sein. Die Andockvorrichtung ist gemäß Anspruch 1 ein Bajonettverschluss oder kann ein Gewinde oder ein Schnappverschluss sein. Vorstellbar ist aber auch ein nicht beanspruchter Mehrportionsbehälter, der über die gesamte Länge als Zylinder ausgebildet ist und dessen Unterseite mit einem Verschlusselement versehen ist, das während des Andockvorganges von Öffnungselementen der Andockvorrichtung geöffnet wird und ein Schütttrichter für die Zuführung des Milchpulvers zu der Fördereinheit, die das Milchpulver zu der Misch- und Schäumvorrichtung fördert, Teil des Zubereitungsgerätes ist.

Ausführungsbeispiele der Erfindung werden im Folgenden anhand einer Zeichnung mit 29 Figuren näher beschrieben, woraus sich weitere vorteilhafte Merkmale der Erfindung ergeben können. Es zeigen:
- Figur 1: Schematisch, teilweise geschnitten, ein Getränkezubereitungsgerät mit einer Kaffeebrüheinheit für loses Kaffeepulver und einer Andockvorrichtung für einen Mehrportionbehälter mit einem angedockten, teilweise geschnittenen Mehrportionsbehälter, einer Anwesenheitsprüfvorrichtung für den Mehrportionsbehälter, einer senkrechten Ausstoßwelle für die Verschlusskappe des Mehrportionbehälters mit einer Förderschnecke und einer Misch- und Schäumvorrichtung,
- Figur 2: schematisch, teilweise geschnitten, ein Getränkezubereitungsgerät mit einer Brüheinheit für eine vorportionierte Kaffeekapsel mit einer eingesetzten Kaffeekapsel, einem angedockten teilweise geschnittenen Mehrportionbehälter, einer Anwesenheitsprüfvorrichtung für den Mehrportionbehälter, einer senkrechten Ausstoßwelle für die Verschlusskappe des Mehrportionbehälters mit einer Förderschnecke und einer Misch- und Schäumvorrichtung,
- Figur 3: die Seitenansicht des Getränkezubereitungsgerätes von Figur 1.

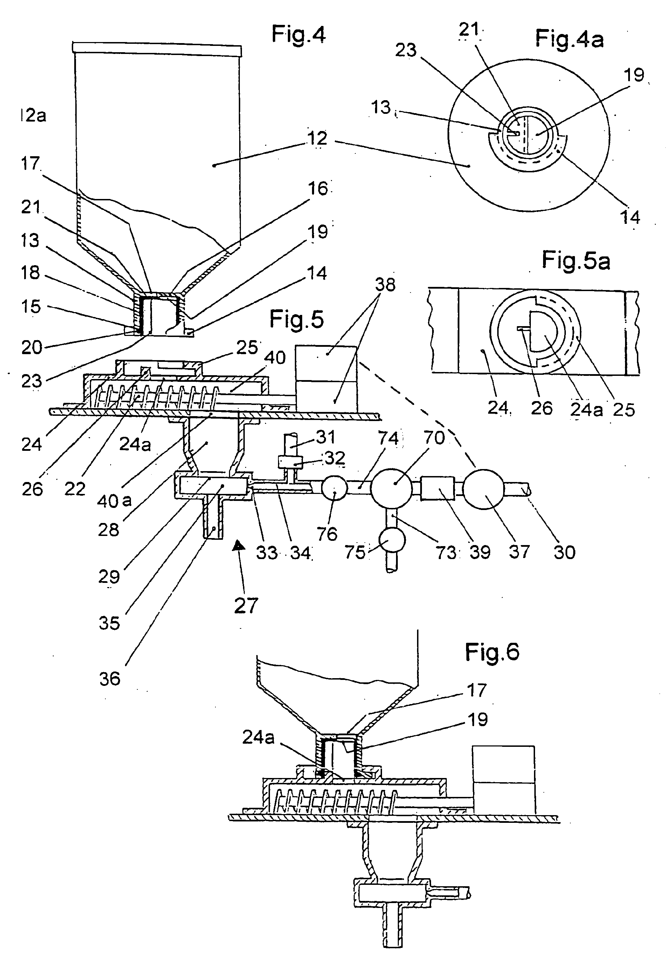

- Figur 4: teilweise geschnitten, einen zylindrischen Mehrportionbehälter mit einem sich trichterförmig verjüngenden unteren Abschnitt, der in einen zylindrischen Hals übergeht, einem innen am Halsansatz liegenden teilweise offenen Boden, einem in einer in dem Hals liegenden Nut eingerasteten drehbaren Verschlusszylinder mit einer teilweise offenen Oberseite, wobei der geschlossene Teil seiner Oberseite den teilweise offenen Boden des Mehrportionsbehälterbodens abdeckt, einem als Drehsicherung für den Verschlusszylinders vorgesehenen, am Verschlusszylinder angebrachten Arretierungssteg, und einem am Umfang des Halses angeordneten Bajonettverschlusselement,
- Figur 4a: die Unteransicht des Mehrportionbehälters von Figur 4,
- Figur 5: einen Schnitt durch die zur Figur 4 gehörige Bajonett Andockvorrichtung für den Mehrportionbehälter mit der Milchpulver Förderstrecke und der Förderschnecke, einer Misch- und Schäumvorrichtung sowie einer Wasserpumpe, einem Durchlauferhitzer, einem Zweiwegeventil, und zwei Durchflussmessern (flow meter),
- Figur 5a: die Draufsicht auf die Bajonett-Andockvorrichtung von Figur 5,
- Figur 6: teilweise geschnitten, den an die Andockvorrichtung der Brüheinheit angedockten und verriegelten Mehrportionbehälter von Figur 4 mit dem auf Durchlass seiner Bodenöffnung gedrehten Mehrportionbehälter,
- Figur 7: teilweise geschnitten, einen zylindrischen Mehrportionbehälter mit einer in den Hals innen eingepressten hutförmigen Verschlusskappe und einem am Hals außen angeordneten Gewinde,
- Figur 7a: die Unteransicht des Mehrportion- Milchpulvers von Figur 7,
- Figur 8: einen Schnitt durch die zur Figur 7 gehörige Gewinde Andockvorrichtung für den Mehrportionbehälter mit einer Ausstoßwelle mit einer Förderschnecke für die Förderung des Milchpulver in die Misch - und Schäumvorrichtung,
- Figur 9: teilweise geschnitten, die Welle und die Förderschnecke von Figur 8 als Detail,
- Figur 10: teilweise geschnitten, die Andockvorrichtung von Figur 8 mit dem angedockten Mehrportionbehälter von Figur 7 mit der senkrecht angeordneten Ausstoßwelle mit der Förderschnecke, der ausgestoßenen Verschlusskappe und der Misch - und Schäumvorrichtung,
- Figur 11: teilweise geschnitten, einen zylindrischen Mehrportionbehälter mit einer in den Hals innen eingepressten Verschlusskappe und einem am Hals angeordneten Bajonettverschlusselement,
- Figur 11a: die Unteransicht des Mehrportionbehälters von Figur 11,
- Figur 12: teilweise geschnitten, einen zylindrischen Mehrportionbehälter mit einer innen am Halsansatz angeordneten Verschlussfolie und einem am Hals angeordneten Bajonettverschlusselement,
- Figur 12a: die Unteransicht des Mehrportionbehälters von Figur 12,
- Figur 13: einen Schnitt durch die zu den Figuren 11 und 12 gehörige Bajonettandockvorrichtung für den Mehrportionbehälter und der Welle für die Verschlusskappe des Mehrportionbehälters von Figur 11 oder für die Verschlussfolie des Mehrportionbehälters von Figur 12 und der Misch- und Schäumvorrichtung,
- Figur 13a: Zeigt die Draufsicht auf die Bajonett-Andockvorrichtung von Figur 13,
- Figur 13b: einen Schnitt durch die Schäumkammer der Misch- und Schäumvorrichtung in Höhe des Düseneintrittes der Wasserzuführung,
- Figur 14: teilweise geschnitten, einen zylindrischen Mehrportionbehälter mit einer innen vor dem Hals angeordneten Verschlussfolie und einem am Hals angeordneten Bajonettverschlusselement,
- Figur 14a: die Unteransicht des Mehrportionbehälters von Figur 14,
- Figur 15: einen Schnitt durch die zu dem Mehrportionbehälter von Figur 14 gehörige Bajonett Andockvorrichtung mit einem Aufstechdorn für die Verschlussfolie, der Milchpulver Fördervorrichtung und der Misch- und Schäumvorrichtung,
- Figur 16: teilweise geschnitten, die Andockvorrichtung von Fig. 15 mit dem angedockten Mehrportionbehälter von Fig. 14 mit durchstoßener Verschlussfolie und der Misch- und Schäumvorrichtung,
- Figur 16a: einen Schnitt durch die Andockvorrichtung von Figur 16 mit dem angedockten Mehrportionbehälter,
- Figur 17: schematisch in auseinandergenommener Darstellung ein Zweiwege-Keramikscheibenventil zur Heißwasserzufuhr zu der Kaffeebrühkammer und/oder der Misch- und Schäumvorrichtung,
- Figur 18a: schematisch die Stellung des Keramikscheibenventils und eines Luftsperrschiebers für die Zubereitung von Cappuccino, sowie ein zugehöriges Ablaufdiagramm,
- Figur 18b: schematisch die Stellung des Keramikscheibenventils und eines Luftsperrschiebers für die Zubereitung von Espresso sowie ein zugehöriges Ablaufdiagramm,
- Figur 18c: schematisch die Stellung des Keramikscheibenventils und eines Luftsperrschiebers für die Zubereitung von Latte Macchiato sowie ein zugehöriges Ablaufdiagramm.

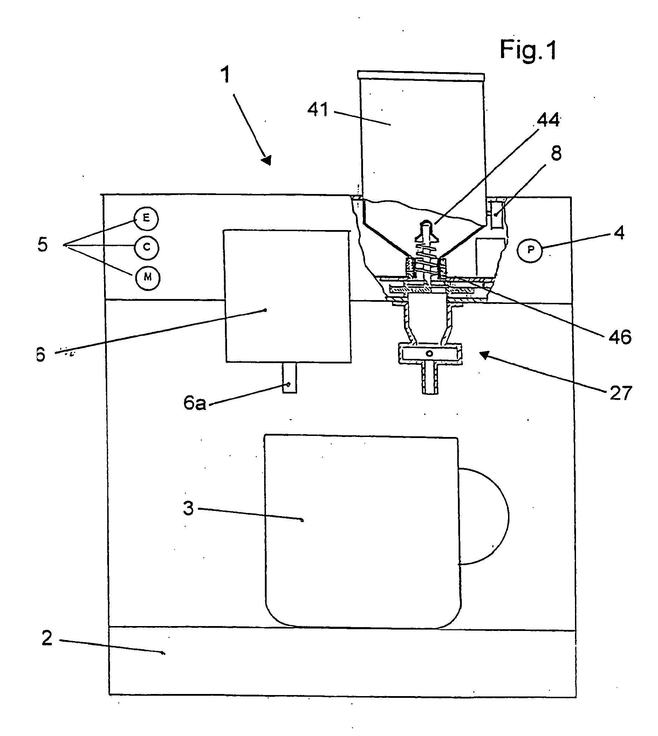

Die Figur 1 zeigt ein Getränkezubereitungsgerät 1 mit einem Sockel 2, einem Auffanggefäß 3 sowie eine Kaffeebrühkammer 6 und einem in der Andockvorrichtung 7 angedockten Mehrportionbehälter 41 mit ausgestoßener Verschlusskappe 44. Unter der Andockvorrichtung 7 ist eine Misch- und Schäumvorrichtung 27 angeordnet. In der Andockvorrichtung ist eine Anwesenheitsprüfvorrichtung 8 vorgesehen. Zum Einschalten des Zubereitungsgerätes ist ein Netzschalter 4 und zur Getränkeartwahl eine Gruppe Programmwahltasten 5 vorgesehen.

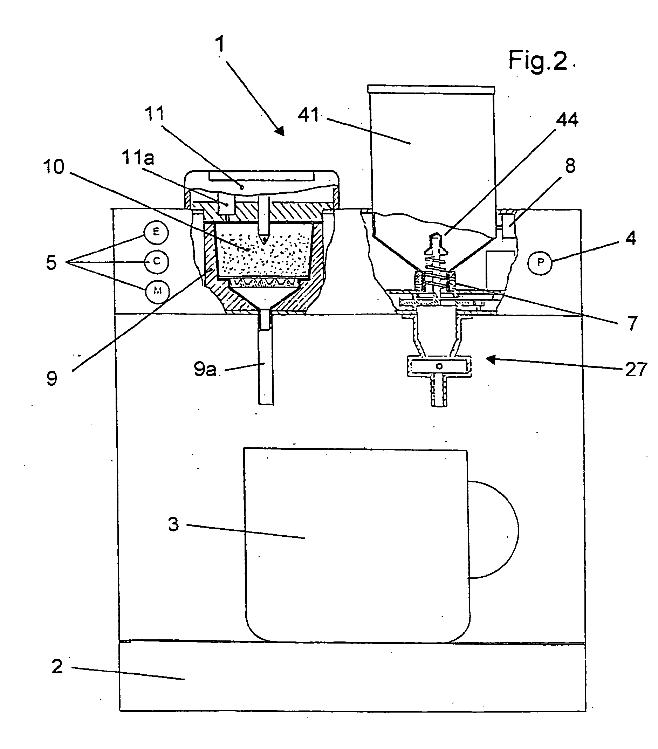

Die Figur 2 zeigt ein Getränkezubereitungsgerät 1 mit einem Sockel 2, einem Auffanggefäß 3 sowie eine Kaffeebrühkammer 6 in Form einer Aufnahmevorrichtung 9 für eine Kaffeeportionskapsel mit einer eingesetzten Kaffeeportionskapsel 10, einer in die Kaffeeportionskapsel eingestochenen Wasserzufühmadel 11a, einer Anwesenheitsprüfvorrichtung 11b und einem Oberteil 11 in geschlossenem Zustand, sowie einem in der Andockvorrichtung 7 angedockten Mehrportionbehälter 41 mit ausgestoßener Verschlusskappe 44. Unter der Andockvorrichtung 7 ist eine Misch- und Schäumvorrichtung 27 angeordnet.

Zum Einschalten des Zubereitungsgerätes ist ein Netzschalter 4 und zur Getränkeartwahl eine Gruppe Programmwahltasten 5 vorgesehen.

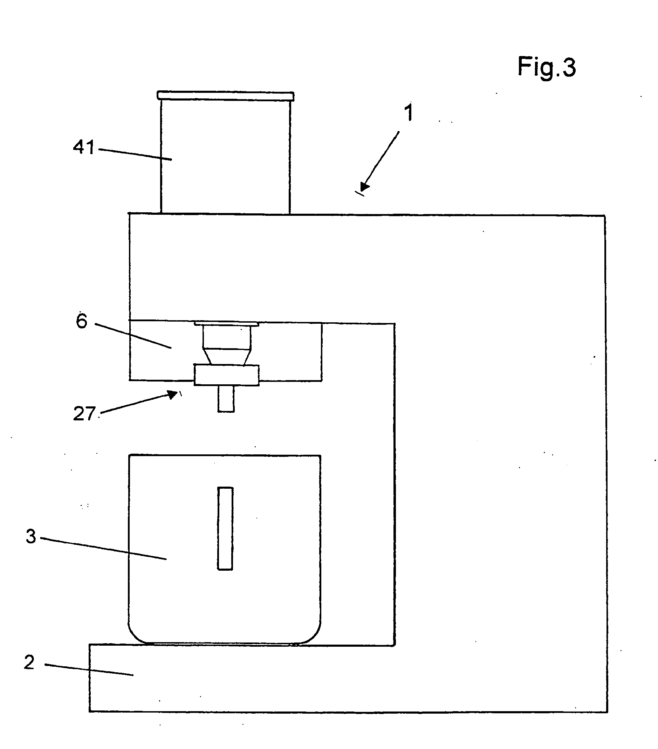

In der Figur 3 ist das Zubereitungsgerät 1 in einer Seitenansicht mit einem Sockel 2, einem Auffanggefäß 3, einer Kaffeebrühkammer 6, einem angedockten Mehrportionbehälter 41 und einer Misch- und Schäumvorrichtung 27 dargestellt.

Bei der in den Figuren 4 und 4a gezeigten Ausführungsform eines Mehrportionbehälters verschließt der mit seiner Rastwulst 20 in der Rastnut 15 des Halses 13 des Mehrportionbehälters 12 eingerastete Verschlusszylinder 18 mit dem geschlossenen Abschnitt 21 seiner Oberseite die teilweise Öffnung 17 des Mehrportions-Milchpulverbehälterbodens 16, so dass der Mehrportionsbehälter 12 dicht verschlossen ist. Der Hals 13 des Mehrportionbehälters 12 ist mit einem Bajonettverschlusselement 14 zum Andocken an die Andockvorrichtung 24 der Brüheinheit versehen. Die Andockvorrichtung ist zum Andocken des Mehrportionsbehälters mit einem Bajonettverschluss 25 ausgestattet. Der Verschlusszylinder 18 ist mit einem Arretierungssteg 23 versehen, der in Verbindung mit einem Rückhaltewinkel 26 der Andockvorrichtung 24 des Zubereitungsgerätes eine Drehung des Verschlusszylinders 18 während des Andockvorganges verhindert. Unterhalb der Andockvorrichtung 24 ist eine Förderstrecke 40 angeordnet, die mittels einer durch eine Motor-Getriebeeinheit 38 angetriebene Förderschnecke 22 das Milchpulver, zu einer Misch- und Schäumvorrichtung, die allgemein mit 27 bezeichnet ist, fördert. Die Förderstrecke 40 ist mit einem Durchbruch 40a versehen, durch den das Milchpulver in den Einlauf der Misch- und Schäumvorrichtung fällt. Die Misch- und Schäumvorrichtung 27 umfasst im Wesentlichen einen Einlauftrichter 28 und unterhalb des Einlauftrichters eine Schäumkammer 35 und unter dieser eine Auslaufstrecke 36. Diese Teile der Misch- und Schäumvorrichtung sind wie in der Zeichnung dargestellt, zu einer virtuellen Mittelachse konzentrisch übereinander angeordnet und im Wesentlichen rotationsymmetrisch ausgebildet. Eine obere Deckwand der Schäumkammer 35 ist mittig mit einer Pulvereinlauföffnung 29 durchbrochen und geht über diese in den über ihr befindlichen Einlauftrichter 28 über. Der Durchmesser der kreisrunden Pulvereinlauföffnung ist kleiner als der Innendurchmesser der Schäumkammer. Von der Pulvereingangsöffnung 29 ausgehend, erweitert sich das Innere des Einlauftrichters 28 progressiv nach oben. In die Schäumkammer 35 mündet eine Düse 33, die so in der zylindrischen Wand der Schäumkammer 35 angeordnet ist, dass die Düse tangential zu einer Innenwand der Schäumkammer offen endet. Die Düse ist etwa in halber Höhe der zylindrischen Wand der Schäumkammer 35 angeordnet.

Zum Aufschäumen als auch nur zur Herstellung eines Getränkes aus gelöstem Milchpulver steht eine Heißwasserleitung 30 stromaufwärts über einen Durchlauferhitzer 39 und eine Pumpe 37 mit einer nicht dargestellten Wasserquelle in Verbindung. Stromabwärts versorgt sie über ein Keramikscheibenventil 70, den Keramikventilausgang 74 und einen Durchflussmesser 76 (flow meter) die Wassereinlaufleitung 34 für die Düse 33 mit Heißwasser. In der Nähe des Wassereinlaufes in die Düse 33 mündet in die Wassereinlaufleitung 34 eine Luftstrecke 31, die über einen Sperrschieber 32 mit der äußeren Atmosphäre in Verbindung steht. Der Sperrschieber 32 ist zur Schaumerzeugung geöffnet. Um die Transportmenge des Pulvers durch die Förderschnecke 22 mit der mittels der Wasserpumpe 37 geförderten Wassermenge zu koordinieren, steht ein nicht dargestellter Antrieb der Wasserpumpe 37 mit der Motor-Getriebeeinheit 38 für den Förderschneckenantrieb 38 über eine Kopplung in Verbindung, die in Figur 4 durch eine durchbrochene Linie angedeutet ist und die durch ein verbindendes Getriebe oder eine gemeinsame Steuereinrichtung der Antriebe realisiert sein kann, um ein optimales Mengenverhältnis des Instantpulvers zu Heißwasserdurchfluss zu gewährleisten.

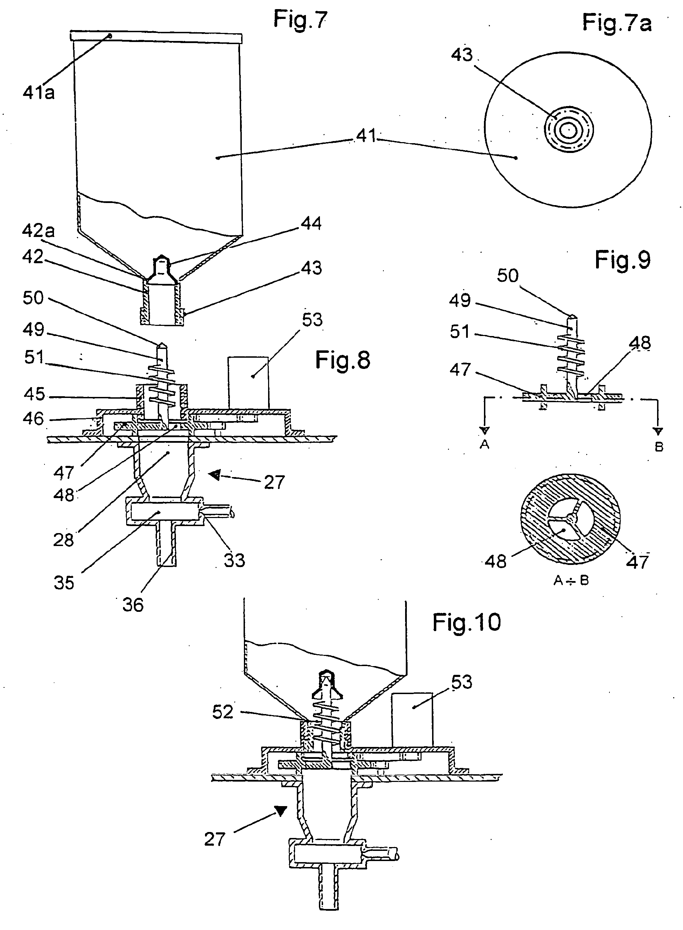

Der Hals 42 der in den Figuren 7 und 7a dargestellte Ausführungsform eines Mehrportionbehälters 41 ist mit einer am inneren Halsansatz 42a mit einer hutförmigen Verschlusskappe 44 verschlossen. Die Hutkappe 44 ist in den Halsansatz eingepresst. Am äußeren Umfang des Halses 42 ist ein Gewinde 43 ausgeformt. Die zu dieser Ausführungsform eines Mehrportionsbehälters 41 gehörende, in Figur 8 gezeigte Andockvorrichtung 46 ist mit einer Gewindehülse 45, die mit einem Innengewinde versehen ist ausgestattet. In der Andockvorrichtung 46 ist eine senkrechte Förderschnecke 51 angeordnet. Diese Förderschnecke 51 ist mit einem Antriebszahnrad 47 versehen, welches von einer Motor-Getriebeeinheit 53 angetrieben wird. Die Förderschnecke windet sich um eine zentral angeordnete Ausstoßwelle 49, deren Spitze 50 geeignet ist, während des Andockvorganges die Verschlusskappe 44 aus ihrem Sitz im Halsansatz des Mehrportionsbehälters 41, wie in Figur 10 gezeigt, nach innen zu stoßen. Das Antriebszahnrad 47der Förderschnecke ist mit Durchbrüchen 48 für den Durchlauf des Milchpulvers versehen. Die unterhalb der Andockvorrichtung 46 angeordnete Misch- und Schäumvorrichtung 27 entspricht der in der Figur 4 beschriebenen.

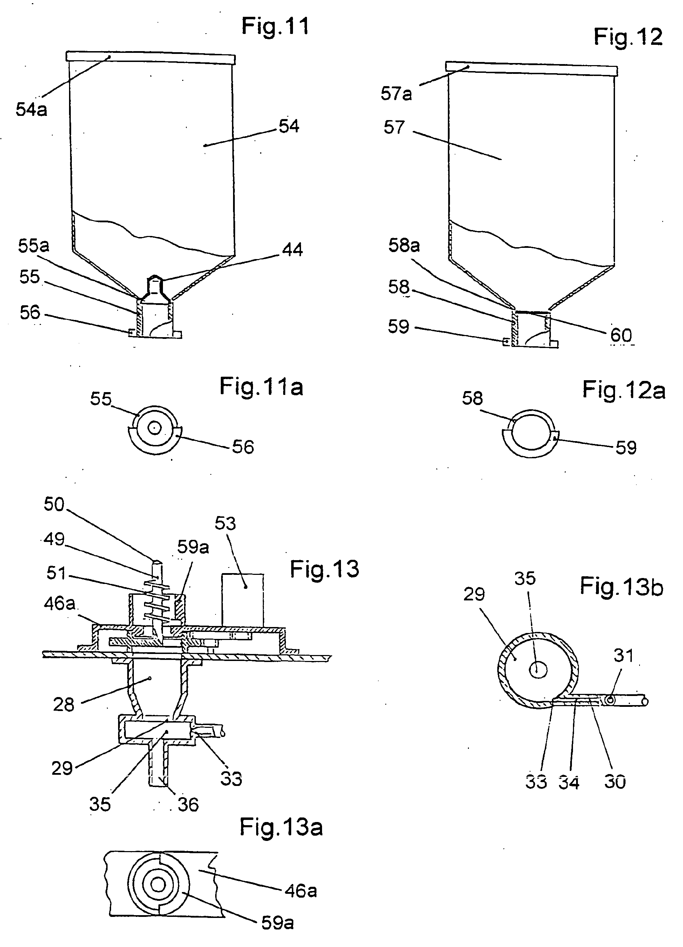

Die in den Figuren 11 und 11a dargestellte Ausführungsform eines Mehrportionsbehälters 54 und die zugehörige Andockvorrichtung 46a unterscheiden sich von der in den Figuren 7 und 7a dargestellten Ausführungsform 41 lediglich durch Bajonett-Anschlussvorrichtungen 56 an dem Mehrportionsbehälter 54 und dem Bajonettverschluss 56a an der Andockvorrichtung 46a.

Bei der in den Figuren 12 und 12a dargestellten nicht beanspruchten Ausführungsform eines Mehrportionsbehälters 57 ist dieser an seinem inneren Halsansatz 58a mit einer Verschlussfolie 60 verschlossen. In der zugehörigen Andockvorrichtung 46a ist wie in Figur 13 gezeigt ebenfalls eine senkrechte Förderschnecke 51 angeordnet, die mit einem Antriebszahnrad 47 versehen ist, welches von einer Motor-Getriebeeinheit 53 angetrieben wird. Die Förderschnecke 51 windet sich um eine senkrecht angeordnete Ausstoßwelle 49, deren Spitze 50 geeignet ist während des Andockvorganges die Verschlussfolie 60 im Halsansatz 57a des Mehrportionbehälters zu durchstoßen. Das Antriebszahnrad 47 der Förderschnecke 51 ist mit Durchbrüchen 48 für den Durchlauf des Milchpulvers versehen. Die Andockelemente 59 und 59a sind in Form eines Bajonettverschlusses ausgebildet.

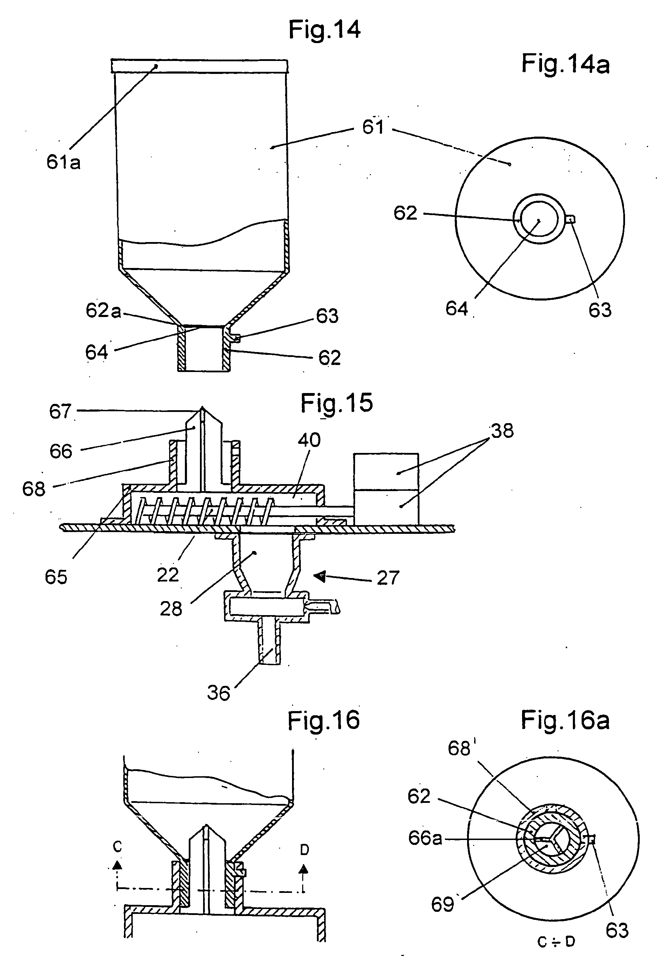

Der in den Figuren 14 und 14a daraestellte nicht beanspruchte Mehrportionbehälter 61 ist an seinem inneren Halsansatz 62a mit einer Verschlussfolie 64 verschlossen. Die Andockvorrichtung 65 ist mit einem Aufstechdorn 66 versehen der geeignet ist, während des Andockvorganges die Verschlussfolie 64 zu durchstechen. Der Aufstechdorn 66 ist aus mindestens drei von einer senkrechten Mittelachse radial ausgehenden senkrecht verlaufenden Stegen 66a die an ihrem oberen Ende in eine gemeinsame Spitze 67 auslaufen gebildet. Der Mehrportionsbehälter 61 und die Andockvorrichtung 65 sind mit Bajonett-Anschlussvorrichtungen 63 und 68 ausgestattet.

Alle Mehrportions-Milchpulverbehälter und die zugehörigen Andockvorrichtungen sind bevorzugt mit einer Bajonett- oder Gewindeandockvorrichtung versehen. Ebenso ist es denkbar, die Andockvorrichtungen in Form eines Schnappverschlusses oder in einer anderen Andock-Konstruktion darzustellen.

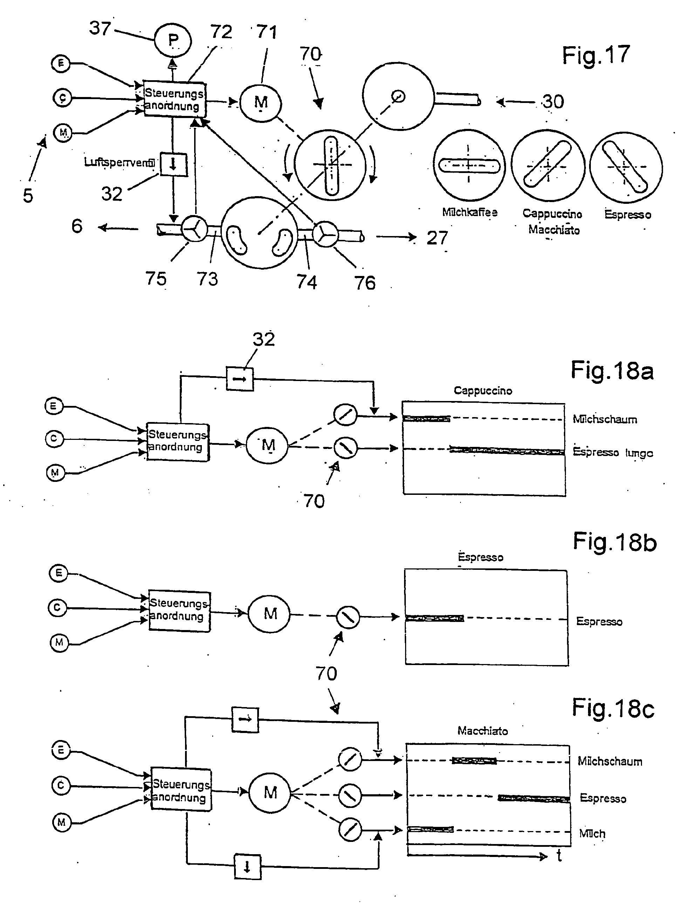

In Figur 17 ist das Zweiwege-Keramikscheibenventil 70, welches an die Heißwasserzuführleitung 30 angeschlossen ist, mit drei auseinandergenommen dargestellten Keramikscheiben gezeigt. Von den drei Scheiben weist eine äußere Scheibe einen Ausgang 73 auf, der über einen Durchflussmesser (flow meter) 75 den Brühwasserzulauf zu der Kaffee- oder Kakaobrühkammer 6 mit Brühwasser versorgt, und einen weiteren Ausgang 74, der über einen Durchflussmesser (flow meter) 76 mit der Heißwasserzuführleitung zur Misch- und Schäumvorrichtung 27 verbunden ist. Je nach der Stellung der mittleren Scheibe des Keramikscheibenventils 70 kann der Ausgang 73 oder der Ausgang 74 oder beide Ausgänge gleichzeitig zur Zubereitung von Kaffee oder Milchschaum beaufschlagt werden. In der in dem linken Teil der Figur 17 dargestellten Position der mittleren Scheibe des Keramikscheibenventils befindet sich diese in ihrer Nullstellung. Zur Zubereitung eines Getränkes kann je nach gewünschter Getränkeart die Scheibe entweder von Hand oder programmgesteuert mittels eines Motors 71 nacheinander in die Position "Espresso" oder "Milch/Milchschaum"/"Latte Macchiato" oder "Milchkaffee" gedreht werden. Diese möglichen Drehstellungen sind für die mittlere Scheibe in dem rechten Teil der Figur 17 angezeigt. Nach einem Zubereitungszyklus wird die mittlere Scheibe entweder automatisch oder von Hand oder zweckmäßigerweise mit dem Öffnungsvorgang der Brühkammer gekoppelt wieder in ihre Nullstellung gedreht.

In den Figuren 18a, 18b, 18c ist schematisch die jeweilige Stellung des Keramikscheibenventils 70 und des Luftsperrschiebers 32 sowie das dazugehörige Zubereitungs-Ablaufdiagramm für die Zubereitung von Cappuccino, Espresso oder Latte Macchiato dargestellt.

Für die Zubereitung eines Kaffee- oder Kakao- oder Kaffee-Milchgetränkes ergeben sich die folgenden Möglichkeiten:
Für die Zubereitung eines Kaffees wird die Brühkammer 6 mit losem Kaffeepulver oder einer vorportionierten Kaffeeportionseinheit 10 beladen. Die Beschickung der Brühkammer 6 mit losem Kaffeepulver oder mit einer Kaffee- oder Kakaoportionseinheit 10 unterscheiden sich je nach Bau- und Ausführungsform der Getränkezubereitungsgeräte und sind Stand der Technik und brauchen nicht näher beschrieben zu werden. Nach Beschicken der Kaffeebrühkammer 6 mit Kaffee oder einer Kaffeeportionseinheit 10 und Einschalten des Zubereitungsgerätes mittels eines Netzschalters 4 wird mittels der Gruppe Programmwahltasten 5 oder eines Programmwahlschalters die Kaffee- /Espressozubereitung angewählt und mittels der Steuerungsanordnung 72 die Ventilanordnung 70 so geschaltet, dass das Brühwasser nur der Kaffeebrühkammer 6 zugeleitet wird. Während des Brühvorganges fließt dann der Kaffeesud über die Auslaufstrecke in das Auffanggefäß 3.

Für die Zubereitung eines Milchgetränkes wird je nach Bauform der Mehrportionbehälter mittels seiner Andockvorrichtung an die korrespondierende Andockvorrichtung des Getränkezubereitungsgerätes angedockt, indem er mittels seines Bajonettverschlusselementes 14, 56, 59, 63 und dem korrespondierenden Bajonettverschluss 25, 59a, 68 der Andockvorrichtung 24, 46, 46a, 65 durch eine Drehbewegung oder durch Einschrauben mittels seines Andockgewindes 43 in die Gewindeaufnahme 45 der Andockvorrichtung 46 dicht verriegelt wird. Dabei kann mittels einer Prüfvorrichtung, die z.B. mit einem Mikroschalter 8 und einer Steuerungsanordnung 72 realisiert ist, geprüft werden, ob sich ein Mehrportionbehälter in der Andockvorrichtung befindet. Nach Einschalten des Zubereitungsgerätes mittels eines Netzschalters 4 wird mittels der Gruppe Programmwahltasten 5 oder eines Programmwahlschalters die Getränkeart angewählt und mittels einer Steueranordnung 72 die Ventilanordnung 70 so geschaltet, dass das Heißwasser nur der Kaffeebrühkammer 6 oder nur der Misch- und Schäumvorrichtung 27 oder beiden Vorrichtungen zugeführt wird.

In einer ersten Ausführungsform eines Mehrportionbehälters ist wie in Figur 4 gezeigt, der Mehrportionbehälter mittels eines in seinem Hals angeordneten Verschlusszylinders 18 verschlossen. Der Verschlusszylinder 18 ist mit einer Rastwulst 20 in einer Rastnut 15 des Halses drehbar eingerastet und überdeckt im Ruhezustand mit der geschlossenen Hälfte 21 seiner Oberseite die Öffnung 17 des Milchpulverbehälterbodens 16, so dass der Mehrportionbehälter 12 dicht verschlossen ist. Zum Andocken des Mehrportionbehälters 12 an die Andockvorrichtung 24 wird dieser mit seinem Hals 13, der mit einem Bajonettverschlusselement 14 versehen ist, in den Bajonettverschluss 25 der Andockeinheit 24 eingeführt und von Hand um 180° bis zu einem Anschlag gedreht. Dadurch wird der Mehrportionbehälter 12 mittels des Bajonettverschlusselementes 14 und dem Bajonettverschluss 25 der Andockeinheit 24 fest verriegelt. Während der Drehung wird der Arretierungssteg 23 des Verschlusszylinders 18 von dem Rückhaltewinkel 26 der Bajonett-Andockvorrichtung 25 festgehalten und damit eine Drehung des Verschlusszylinders 18 verhindert. Dadurch kommen die Durchlassöffnungen 17 des Mehrportionbehälterbodens 16 und die Durchlassöffnung 19 des Verschlusszylinders 18 zur Deckung und das Milchpulver fließt durch den Durchbruch 24a der Andockvorrichtung 24 in die Förderstrecke 40 und wird von der Förderschnecke 22 zu der Misch - und Schäumeinheit 27 gefördert, wo es durch den Durchbruch 40a in den Einlauftrichter 28 der Misch- und Schäumvorrichtung 27 fällt. Für die Zubereitung von Milchschaum werden die Motor-Getriebeeinheit 38 der Förderschnecke 22 und die Wasserpumpe 37 für die Förderung des Zubereitungswassers synchron gestartet. Die Förderschnecke 22 fördert das Milchpulver in den Einlauftrichter 28 der Misch - und Schäumeinheit 27. Gleichzeitig pumpt die Wasserpumpe 37 Frischwasser aus einem nicht dargestellten Wasserbehälter über eine Wasserzuführleitung 30 durch einen Durchlauferhitzer 39 und ein Keramikscheibenventil 70 in die Schäumkammer 35 der Misch- und Schäumeinheit 27. Die Fördermengen von Milchpulver und Wasser sind programmiert auf einander abgestimmt. Die Schäumkammer 35 ist unterhalb des Einlauftrichters 28 angeordnet und ist zylindrisch aufgebaut. Sie ist mit dem Einlauftrichter 28 durch eine obere Einlauföffnung 29 verbunden, deren Durchmesser kleiner als der Durchmesser der Schäumkammer 35 ist. Nach unten ist die Schäumkammer mit einer Auslaufstrecke 36 verbunden. Der Wassereinlauf in die Schäumkammer 35 erfolgt tangential durch eine Düse 33, etwa in halber Höhe der zylindrischen Schäumkammer 35. Kurz vor dem Eintritt des Heißwasserstrahls in die Schäumkammer mündet in die Heißwasserzuführleitung 30 eine Luftleitung 31, aus der das mit hoher Geschwindigkeit in der Wassereinlaufleitung 34 fließende Wasser Luft mitreißt. Das Wasser-Luftgemisch wird durch den tangentialen Einlauf in der zylindrischen Schäumkammer 35 in eine schnelle Rotation versetzt und tritt teilweise aus der Schäumkammer 35 nach oben in den Einlauftrichter 28 aus und steigt, verursacht durch die sich nach oben aufweitende Form des Einlauftrichters 28 in diesem nach oben und mischt sich dort mit dem einfallenden Milchpulver. Dabei verliert das dabei entstehende Milch-Luftgemisch an Rotationsenergie und sinkt innerhalb des aufsteigenden Wasserstrudels nach unten in die Schäumkammer 35 zurück, wo es von dem nachströmend eintretenden Wasser wieder in schnellere Rotation versetzt wird und dabei aufschäumt. Da immer weiter Wasser und Milchpulver nachströmen, entsteht ein fortlaufender Misch- und Schäumvorgang, wobei der entstehende Milchschaum nach unten aus der Schäumkammer gedrängt wird, und über die Auslaufstrecke 36 abfließt. Die Luftleitung 31 ist mit einem Sperrschieber 32 versehen, der die Luftzufuhr in die Wasserleitung 30 zu unterbrechen gestattet. Dieses ermöglicht, statt Milchschaum lediglich heiße Milch zu bereiten. Bei der Milchschaumerzeugung ist der in der Luftleitung 31 angeordnete Luftsperrschieber 32 geöffnet. Wird der Luftsperrschieber 32 hingegen geschlossen, was manuell oder programmgesteuert selbsttätig erfolgen kann und die Luftzufuhr zu dem Schäumzylinder 35 demgemäß gesperrt, so wird in diesem eine Schaumbildung weitgehend verhindert und es tritt aus der Auslaufstrecke 36 der Schäumkammer 35 lediglich erhitzte Milch aus. Programmgesteuert kann damit in der Ablauffolge: Milch - Milchschaum - Espresso Latte Macchiato erzeugt werden. Zur Entnahme des Mehrportionbehälters 12 wird dieser um 180° zurückgedreht und damit in der Bajonettaufnahmevorrichtung entriegelt.

In einer zweiten Ausführungsform des Mehrportionbehälters ist der Hals 42 des Mehrportionbehälters 41 mit einem Außengewinde 43 ausgestattet. In den Hals 42 des Mehrportionbehälters 41 ist eine hutförmige Verschlusskappe 44 eingepresst. Beim Andocken an die Andockvorrichtung 46a wird der Hals 42 des Mehrportionbehälters 41 in die Gewindehülse 45 der Andockvorrichtung 46a eingeführt und bis zum Anschlag eingeschraubt.

Dabei fährt die Ausstoßwelle 49 mit der Förderschnecke 51 in den Hals 55 des Mehrportionbehälters 54 ein und die Spitze 50 der Welle 49 stößt die Verschlusskappe 44 aus ihrer Verschlussposition. Durch den dadurch entstehenden ringförmigen Schüttspalt 52 fließt das Milchpulver in die Förderschnecke 51. Durch die hutförmige Ausbildung der Verschlusskappe verbleibt diese auf der Ausstoßwelle 49 und kann nicht in den Schüttspalt 52 fallen. Für die Zubereitung von Milchschaum werden die Motor-Getriebeeinheit 53 der Förderschnecke 51 und die Wasserpumpe 37, die für die Förderung von Heißwasser und Milchpulver in einem abgestimmten Mengenverhältnis programmiert sind, synchron gestartet. Die Motor-Getriebeeinheit 53 treibt dabei das Antriebszahnrad (47) der Förderschnecke, das eine Baueinheit mit der Förderschnecke 51 bildet an und das Milchpulver wird mittels der Förderschnecke 51 durch die Durchlässe 48 des Förderschneckenzahnrades 47 senkrecht in den Einlauftrichter 28 der Misch- und Schäumvorrichtung 27 gefördert. Die Wasserzuführung zu der Misch- und Schäumvorrichtung und der Aufschäumvorgang erfolgen wie bei der ersten Ausführungsform geschildert. Der entstandene Milchschaum fließt ebenfalls über die Auslaufstrecke 36 der Schäumkammer 35 in das Auffanggefäß. Zur Entnahme wird der Mehrportionbehälter aus der Gewindehülse 45 geschraubt. Bei einer weiteren Ausführungsform eines Mehrportionbehälters ist dieser ebenfalls mit einer hutförmigen Verschlusskappe 44 ausgestattet, für den Andockvorgang ist der Mehrportionbehälter 54 aber mit einem Bajonettverschlusselement 56 versehen.

In einer nicht beanspruchten dritten Ausführungsform eines Mehrportionbehälters ist der Verschluss des Mehrportionbehälters 57 mittels einer am inneren Halsansatz 57a angeordneten Verschlussfolie 60 realisiert. Das Andocken der Mehrportionbehälter 57 an die Andockvorrichtung 46a und Verriegeln erfolgt mittels des am Hals 58 des Mehrportionbehälters 57 angeordneten Bajonettverschlusselementes 59 und einer Bajonettverschlusshülse 59a an der Andockvorrichtung 46a. Während des Andockvorganges durchstößt die Spitze 50 der Welle 49 der Förderschnecke 51 die Verschlussfolie 60 und durch den entstandenen Aufriss 52 fließt das Milchpulver in die Förderschnecke 51 und diese fördert das Milchpulver direkt senkrecht in den Einlauftrichter 28 der Misch- und Schäumvorrichtung 27. Der Misch- und Schäumvorgang ist mit der ersten Ausführungsform identisch. Der entstandene Milchschaum fließt ebenfalls über die Auslaufstrecke 36 in das Auffanggefäß.

In einer nicht beanspruchten vierten Ausführungsform eines Mehrportionbehälters wird der Mehrportionbehälter 61 ebenfalls mittels einer an seinem inneren Halsansatz 62a angeordneten Verschlussfolie 64 verschlossen. Das Andocken und Verriegeln des Mehrportionbehälters 61 erfolgt mittels eines Bajonettverschlusselementes 63 am Hals 62 des Mehrportionbehälters 61 und einem Bajonettverschluss 68 der Andockvorrichtung 65. Während des Andockvorganges durchsticht der auf der Andockvorrichtung 65 angeordnete Aufstechdorn 66 mit der Spitze seiner sternförmig angeordneten senkrechten Stege 66a die Verschlussfolie 64 und durch die zwischen den Stegen 66a liegenden Freiräume 69 fließt das Milchpulver in die Förderstrecke 40 und wird von der Förderschnecke 22 in den Einlauftrichter 28 der Misch- und Schäumvorrichtung 27gefördert.

Der Misch- und Schäumvorgang ist mit der ersten Ausführungsform identisch. Der entstandene Milchschaum fließt ebenfalls über die Auslaufstrecke 36 der Schäumkammer 35 in das Auffanggefäß 3.

Für die Zubereitung eines Kaffee-Milchgetränkes werden sowohl die Kaffeebrühkammer 6 mit Kaffee beschickt als auch ein Mehrportionbehälter an der Andockvorrichtung angedockt.

Die Zubereitung eines Kaffee-Milchgetränkes erfolgt entweder von Hand oder programmgesteuert nacheinander, wie in den Figuren 18a und 18c dargestellt, in der Ablauffolge:
Für Cappuccino: Erst Zubereitung von Milchschaum, dann Zubereitung von Espresso.
Für Latte Macchiato: Erst Zubereitung von Milch, dann Milchschaum, dann Espresso.

### Bezugszeichen

- 1:: Getränkezubereitungsgerät
- 2:: Gerätesockel
- 3:: Auffanggefäß
- 4:: Netzschalter
- 5:: Gruppe Programmwahltasten
- 6:: Kaffeebrühkammer
- 6a:: Kaffeeauslauf
- 7:: Andockvorrichtung
- 8:: Prüfvorrichtung
- 9:: Kaffeekapsel Aufnahmevorrichtung
- 9a:: Kaffeeauslauf
- 10:: Kaffeekapsel
- 11:: Aufnahmevorrichtung Oberteil
- 11a:: Prüfvorrichtung
- 12:: Mehrportion-Milchpulverbehälter
- 12a:: Mehrportion-Milchpulverbehälterdeckel
- 13:: Mehrportion-Milchpulverbehälterhals
- 14:: Bajonettelement
- 15:: Rastwulst
- 16:: Mehrportion-Michpuverbehälterboden; geschlossener Teil
- 17:: Mehrportion-Michpuverbehälterboden; offener Teil
- 18:: Verschlusszylinder
- 19:: Verschlusszylinderdeckel; offener Teil
- 20:: Rastnut
- 21:: Verschlusszylinderdeckel; geschlossener Teil
- 22:: Förderschnecke
- 23:: Rückhaltesteg
- 24:: Andockvorrichtung
- 25:: Bajonettverschluss
- 26:: Rückhaltewinkel
- 27:: Misch - und Schäumvorrichtung
- 28:: Einlauftrichter
- 29:: obere Einlauföffnung
- 30:: Heißwasserleitung
- 31:: Luftleitung
- 32:: Sperrschieber
- 33:: Düse
- 34:: Heißwassereinlaufleitung
- 35:: Schäumkammer
- 36:: Auslaufstrecke
- 37:: Wasserpumpe
- 38:: Motor-Getriebeeinheit
- 39:: Durchlauferhitzer
- 40:: Förderstrecke
- 40a:: Durchbruch
- 41:: Mehrportion-Milchpulverbehälter
- 41a:: Mehrportion-Milchpulverbehälterdeckel
- 42:: Mehrportion-Milchpulverbehälterhals
- 42a:: innerer Halsansatz
- 43:: Andockgewinde
- 44:: Verschlusskappe
- 45:: Gewindehülse
- 46:: Andockvorrichtung
- 47:: Antriebszahnrad
- 48:: Antriebszahnrad-Durchbrüche
- 49:: Ausstoßwelle
- 50:: Förderschneckenwellenspitze
- 51:: Förderschnecke
- 52:: Einlaufspalt
- 53:: Motor-Getriebeeinheit
- 54:: Mehrportion-Milchpulverbehälter
- 54a:: Mehrportion-Milchpulverbehälterdeckel
- 55:: Mehrportion-Milchpulverbehälterhals
- 55a:: innerer Halsansatz
- 56:: Bajonettverschlusselement
- 57:: Mehrportion-Milchpulverbehälter
- 57a:: Mehrportion-Milchpulverbehälterdeckel
- 58:: Mehrportion-Milchpulverbehälterhals
- 58a:: innerer Halsansatz
- 59:: Bajonettverschlusselement
- 60:: Verschlussfolie
- 61:: Mehrportion-Milchpulverbehälter
- 61a:: Mehrportion-Milchpulverbehälterdeckel
- 62:: Mehrportion-Milchpulverbehälterhals
- 62a:: innerer Halsansatz
- 63:: Bajonettverschlusselement
- 64:: Verschlussfolie
- 65:: Andockvorrichtung
- 66:: Aufstechdorn
- 66a:: Aufstechdornstege
- 67:: Aufstechdornspitze
- 68:: Bajonettverschlusshülse
- 70:: Keramikscheibenventil
- 71:: Motor
- 72:: Steuerungsanordnung
- 73:: Keramikscheibenventil-Auslass
- 74:: Keramikschelbenventil-Auslass
- 75:: Durchflussmesser (flow meter)
- 76:: Durchflussmesser (flow meter)

## Patentansprüche

1. Getränkezubereitungsgerät mit einer Brüheinheit und einem austauschbaren luft- und aromadicht versiegelten Mehrportionsbehälter (12) für pulverförmige Getränkebasisstoffe, wobei der Mehrportionsbehälter (12) mit einer Andockvorrichtung (14) ausgestattet ist, die mit einer Andockvorrichtung (24) der Brüheinheit des Zubereitungsgerätes korrespondiert, wobei der Mehrportionsbehälter (12) an seinem unteren Ende mit einem Verschlusselement verschlossen ist, das von einem Öffnungselement der Andockvorrichtung (24) der Brüheinheit während des Andockvorganges öffnungsfähig ist,
**dadurch gekennzeichnet,**
**dass** das Verschlusselement des Mehrportionsbehälters (12) ein Verschlusszylinder (18) ist,
**dass** die Andockvorrichtung des Mehrportionsbehälters (12) ein Bajonettverschluss (14) ist,
**dass** der Mehrportionbehälter (12) zylinderförmig ist und sich in seinem unteren Abschnitt trichterförmig verengt und in einen zylindrischen Hals (13) übergeht,
**dass** der Mehrportionbehälter (12) an seinem Hals (13) mit einem teilweise geöffneten Boden (16; 17) verschlossen ist,
**dass** im Hals des Mehrportionbehälters (12) der drehbare Verschlusszylinder (18) angeordnet ist, der einen teilweise geöffneten Deckel (19) aufweist,
**dass** ein geschlossener Teil (21) des Verschlusszylinderdeckels im Ausgangszustand den geöffneten Abschnitt (17) des Mehrportionbehälterbodens (16) überdeckend verschließt,
**dass** in dem Verschlusszylinder (18) ein Arretierungssteg (23) angeordnet ist,
**dass** während der durch eine Drehung des Mehrportionsbehälters (12) erfolgenden Verriegelung des Mehrportionbehälters (12) in der Andockvorrichtung (24) der Verschlusszylinder (18) von einem Rückhaltewinkel (26) der Andockvorrichtung (24) und dem Arretierungssteg (23) des Verschlusszylinders (18) an einer Drehbewegung gehindert wird, und
**dass** der offene Deckelabschnitt (19) des Verschlusszylinders (18) in angedocktem Zustand an die Andockvorrichtung (24) kongruent mit dem offenen Abschnitt (17) des Mehrportionbehälterbodens ist.

2. Mehrportionbehälter, der mit dem Getränkezubereitungsgerät nach Anspruch 1 zusammenwirkt,
**dadurch gekennzeichnet,**
**dass** der Mehrportionbehälter (12) an seinem oberen Ende mit einem Deckel (12a) verschlossen ist.

3. Getränkezubereitungsgerät mit einer Brüheinheit (6, 6a) und einem austauschbaren luft- und aromadicht versiegelten Mehrportionsbehälter (41) für pulverförmige Getränkebasisstoffe, wobei der Mehrportionsbehälter (41) mit einer Andockvorrichtung (43) ausgestattet ist, die mit einer Andockvorrichtung (46) der Brüheinheit des Zubereitungsgerätes korrespondiert, wobei der Mehrportionsbehälter (41) an seinem unteren Ende mit einem Verschlusselement verschlossen ist, das von einem Öffnungselement (49; 50) der Andockvorrichtung (46) der Brüheinheit während des Andockvorganges öffnungsfähig ist,
wobei das Verschlusselement des Mehrportionsbehälters (41) eine hutförmige Kappe (44) ist, und
wobei der Mehrportionsbehälter (41) zylinderförmig ist und sich in seinem unteren Abschnitt trichterförmig verengt und in einen zylindrischen Hals übergeht,
wobei der Mehrportionbehälter (41) an seinem inneren Halsansatz (42a) mit der hutförmigen Kappe verschlossen ist,
wobei die hutförmige Kappe (44) während des Andockvorganges von dem Öffnungselement (49; 50) der Andockvorrichtung (46) in den Mehrportionbehälter (41) gestoßen wird,
**dadurch gekennzeichnet,**
**dass** das Öffnungselement eine Welle (50) einer Förderschnecke (51) ist und
**dass** die Welle (50) mit der Förderschnecke (51) den pulverförmigen Getränkebasisstoff vertikal aus dem Mehrportionbehälter (41) in eine Misch- und Schäumvorrichtung (27) fördert.

## Claims

1. Beverage preparation apparatus with a brewing unit and an exchangeable air and aroma-tightly sealed multi-portion container (12) for powdered drink constituents, wherein the multi-portion container (12) is provided with a docking device (14) which corresponds with a docking device (24) of the brewing unit of the preparation device, wherein the multi-portion container (12) is closed at its lower end by a closure element which may be opened during the docking process by an opening element of the docking device (24) of the brewing unit,
**characterized in**
**that** the closure element of the multi-portion container (12) is a closure cylinder (18),
**that** the docking device of the multi-portion container (12) is a slide catch (14), that the multi-portion container (12) is cylinder-shaped and constricts itself funnel-shaped in its lower section and changes into a cylindrical neck (13),
**that** the multi-portion container (12) is closed at its neck by a partly opened bottom (16; 17),
**that** in the neck of the multi-portion container (12), the rotary closure cylinder (18) is disposed which includes a partly opened lid (19), that a closed portion (21) of the closure cylinder lid, when in the initial state, overlappingly closes the opened section (17) of the multi-portion container bottom (16),
**that** in the closure cylinder (18), a stop bar (23) is provided,
**that** during the course of a locking procedure of the multi-portion container (12) caused by a rotation of the multi-portion container (12) in the docking device (24), the closure cylinder (18) is prevented from performing a rotary movement by a hold-back angle bracket (26) of the docking device (24) and by the stop bar (23) of the closure cylinder (18), and
**that** the open lid section (19) of the closure cylinder (18) when docked to the docking device (24) is congruent with the open section (17) of the multi-portion container bottom.

2. Multi-portion container interacting with the beverage preparation apparatus according to claim 1,
**characterized in**
**that** the multi-portion container (12) is closed on its upper end by a lid (12a).

3. Beverage preparation apparatus with a brewing unit (6, 6a) and an exchangeable air and aroma-tightly sealed multi-portion container (41) for powdered drink constituents, wherein the multi-portion container (41) is provided with a docking device (43) which corresponds with a docking device (46) of the brewing unit of the preparation apparatus, wherein the multi-portion container (41) is locked at its lower end by a closure element which may be opened during the docking process by an opening element (49, 50) of the docking device (46) of the brewing unit,
wherein the closure element of the multi-portion container (41) is a hat-shaped cap (44), and
wherein the multi-portion container (41) is cylinder-shaped and constricts itself, funnel-shaped, in its lower section and changes into a cylindrical neck,
wherein the multi-portion container (41) is closed at its inner neck projection (42a) by the hat-shaped cap,
wherein the hat-shaped cap (44) is pushed, during the course of the docking process by the opening element (49; 50) of the docking device (46) into the multi-portion container (41),
**characterized in**
**that** the opening element is a shaft (50) of a worm conveyor (51), and
**that** the shaft (50) vertically conveys by means of the worm conveyor the powdered drink constituent from the multi-portion container (41) into a blending and frothing apparatus (27).

## Revendications

1. Appareil pour la préparation de boissons, comprenant une unité d'ébouillantage et un récipient interchangeable (12) contenant plusieurs portions, fermé de façon étanche à l'air et aux arômes, pour substances de base de boissons en poudre, le récipient contenant plusieurs portions (12) étant équipé d'un dispositif de raccordement (14) qui correspond à un dispositif de raccordement (24) de l'unité d'ébouillantage de l'appareil de préparation, et le récipient contenant plusieurs portions (12) étant fermé en son extrémité inférieure par un élément obturateur qui peut être ouvert par un élément d'ouverture du dispositif de raccordement (24) de l'unité d'ébouillantage pendant l'opération de raccordement,
**caractérisé en ce que**
l'élément obturateur du récipient contenant plusieurs portions (12) est un cylindre obturateur (18),
le dispositif de raccordement du récipient contenant plusieurs portions (12) est un emboîtement à baïonnette (14),
le récipient contenant plusieurs portions (12) est cylindrique, se rétrécit en entonnoir dans son segment inférieur et se termine par un col cylindrique (13),
le récipient contenant plusieurs portions (12) est fermé au niveau de son col (13) par un fond partiellement ouvert (16, 17),
le cylindre obturateur tournant (18) qui présente un couvercle partiellement ouvert (19) est disposé dans le col du récipient contenant plusieurs portions (12),
à l'état initial, la partie fermée (21) du couvercle du cylindre obturateur obture le segment ouvert (17) du fond (18) du récipient contenant plusieurs portions (12),
une nervure d'arrêt (23) est prévue dans le cylindre obturateur (18),
pendant le verrouillage du récipient contenant plusieurs portions (12) dans le dispositif de raccordement (24), qui s'effectue par une rotation du récipient contenant plusieurs portions (12), le cylindre obturateur (18) est empêché de tourner par un coude de retenue (26) du dispositif de raccordement (24) et par la nervure d'arrêt (23) du cylindre obturateur (18), et
à l'état raccordé au dispositif de raccordement (24), le segment ouvert (19) du couvercle du cylindre obturateur (18) coïncide avec le segment ouvert (17) du récipient contenant plusieurs portions (12).

2. Récipient contenant plusieurs portions qui coopère avec l'appareil de préparation de boissons selon la revendication 1,
**caractérisé en ce que**
le récipient contenant plusieurs portions (12) est fermé par un couvercle (12a) en son extrémité supérieure.

3. Appareil de préparation de boissons comprenant une unité d'ébouillantage (6, 6a) et un récipient interchangeable (41) contenant plusieurs portions, fermé de façon étanche à l'air et aux arômes, pour substances de base de boissons en poudre, le récipient contenant plusieurs portions (41) étant équipé d'un dispositif de raccordement (43) qui correspond à un dispositif de raccordement (46) de l'unité d'ébouillantage de l'appareil de préparation, et le récipient contenant plusieurs portions (41) étant fermé en son extrémité inférieure par un élément obturateur qui peut être ouvert par un élément d'ouverture (49, 50) du dispositif de raccordement (46) de l'unité d'ébouillantage pendant l'opération de raccordement,
l'élément obturateur du récipient contenant plusieurs portions (41) étant un capuchon en forme de chapeau (44), et
le récipient contenant plusieurs portions (41) étant de forme cylindrique, se rétrécissant en forme d'entonnoir dans son segment inférieur et se terminant par un col cylindrique,
le récipient contenant plusieurs portions (41) étant fermé au niveau de son prolongement intérieur en forme de col (42a) par le capuchon en forme de chapeau,
le capuchon en forme de chapeau (44) étant repoussé dans le récipient contenant plusieurs portions (41) par l'élément d'ouverture (49, 50) du dispositif de raccordement (46) pendant l'opération de raccordement,
**caractérisé en ce que**
l'élément d'ouverture est un arbre (50) d'une vis transporteuse (51), et
l'arbre (50) transporte la substance de base de la boisson en poudre dans la direction verticale, du récipient contenant plusieurs portions (41) dans un dispositif de mélange et de moussage (27), au moyen de la vis transporteuse (51).
